# EUROPÄISCHE PATENTSCHRIFT

(11) **EP 1 873 120 B1**
(45) Veröffentlichungstag und Bekanntmachung des Hinweises auf die Patenterteilung: **02.06.2010**
(21) Anmeldenummer: 06014887.1
(22) Anmeldetag: 18.07.2006
(51) Int. Cl.: C02F 3/06, C02F 3/10, C02F 3/30

(54) **Fäkalienabwasserbehandlungsanlage durch Biofiltration (BFBA)**
Device for treating fecal waters by biofiltration
Dispositif de traitement des eaux fécaux par biofiltration

(30) Priorität: 28.06.2006 BR PI0602931 P
(43) Veröffentlichungstag der Anmeldung: 02.01.2008
(73) Patentinhaber: Kraus, Hans Georg, 04662002 Sao Paulo (BR)
(72) Erfinder: Kraus, Hans Georg, 04662002 Sao Paulo (BR)
(74) Vertreter: COHAUSZ DAWIDOWICZ HANNIG & SOZIEN

(56) Entgegenhaltungen:
- DE-A1- 4 429 529
- FR-A- 2 430 919
- FR-A1- 2 848 178
- GB-A- 1 400 215
- US-A- 4 210 528
- US-B1- 6 207 047

## Beschreibung

Die hier vorliegende Erfindung betrifft eine biologische Fäkalienabwasserbehandlungsanlage (BFBA), die spezielle Anwendung für die Sanierung in all denjenigen Fällen gewährleistet, wo Fäkalienabwässer vorkommen und kommunale Anlagen nicht zur Verfügung stehen, insbesondere hauptsächlich bei aller Art von Booten, Schiffen, Mobilwagen, Caravans, Zügen, Bussen, mobilen Toilettenanlagen, Ölplattformen, Hotels, Gasthäusern und einzelnen Häusern.

Im allgemeinen sind der kleine Platzbedarf bei einem kleinen Raum und eine große Anzahl von Leuten die Ursache unangenehmer Gerüche, die sich durch Mercaptane auch in sehr geringer Konzentration bemerkbar machen, insbesondere hauptsächlich bei nicht vorhandener ausreichender Belüftung. Dies ist auch die Ursache für die Antipathie der Bootsbesitzer und anderer Anwender gegen Fäkalientanks und andere Systeme.

Die Fäkalientanks, die normalerweise die häufig verwendeten Einheiten im Bereich des Bootsbaus sind, gewährleisten die WC- Spülung und müssen nach einiger Zeit, oder, wenn sie voll sind, weit außen im Meer (5 km) oder in den Marinas ausgepumpt werden. Es kommen bei der Anwendung dieser Fäkalientanks Fehler vor, indem die Boote nicht weit genug vom Land entfernt auspumpen und /oder wenn die Abpumpvorrichtungen in den Marinas nicht vorhanden sind, oder wenn große Warteschlangen zum Abpumpen vorkommen und dann dieses organische Material zu nahe zur Küstennähe abgelassen wird, eventuell an die Strände angespült wird und so für Mensch und Umwelt Probleme erzeugt.

Diese Probleme ergänzen sich mit der Tatsache, dass die Bootsinhaber dann längere Zeit dieses Fäkalienabwasser im Fäkalientank lassen, und wegen anaerobischer Verarbeitung der Fäkalien die flexiblen Leitungen unangenehme Gerüche durch die Plastik- oder Gummiwände durchlassen, und die normalerweise kleinen Räume mit einem unangenehmen Geruch füllen und den Inhaber zur schnellen Entleerung der Fäkalientanks zwingen.

Manchmal wird das Auspumpen vom Inhaber vergessen und eine große Menge von Methan wird dann von der biologischen anaerobischen Fermentation gebildet, und pathogene Mikroorganismen vermehren sich in diesen für sie geeigneten optimalen Konditionen und bringen deswegen zwei gefährliche und ungewünschte Resultate zustande, anstatt einer definitiven Lösung. Für die Sicherheit, Gesundheit und Umwelt ist der Übergang in diese Bedingungen unerwünscht, und ein Ablassen in diesem Zustand mit der Verbreitung gesundheitsgefährdender Stoffe verbunden.

Unangenehme Gerüche sind Unannehmlichkeiten, die eine große Unzufriedenheit hervorrufen. Das Ablassen von Fäkalienmaterial bedeutet jedoch eine generelle Umweltverschmutzung. Die Verschmutzung und Kontaminierung der Gewässer durch das Ablassen von Fäkalien z.B. aus Booten, Segelbooten und Yachten wächst jährlich in derselben Proportion wie der Zuwachs des Bootsmarktes. Diese Tatsache bestätigt, wie wichtig eine innovative und wirtschaftliche Fäkalienbehandlungsanlage ist, die alle diese Probleme löst.

Die Verwendung von Rohren, die aus Hartplastik, wie z.B. aus Hart - PVC gefertigt sind, verhindern die Migration der Gerüche durch die Wände, sind aber meistens bruchanfällig und schwer zu bearbeiten. Die Gerüche bestehen hauptsächlich aus kleinmolekularen Mercaptanen und durchdringen alle flexiblen Kunststoffe und gummiartige Schläuche.

In den Mobilcampingwagen, Heimmobilen und Caravans werden ausziehbare und tragbare Fäkalientanks verwendet, die normalerweise in Tankstellentoiletten oder in speziellen Anlagen entleert werden.

Dies ist sicherlich eine korrekte und ökologische Lösung. Aber diese Kästen herauszunehmen, zu transportieren und in die Toilette zu entleeren, sind keine angenehmen Arbeiten, die auch zu Verschmutzungen, Kontaminierungen und anderen Unannehmlichkeiten führen können.

In vielen dieser Fälle ist die vorhandene Infrastruktur, um die Sammlung und Verarbeitung des Fäkalienmaterials durchzuführen, nicht ausreichend, um ein richtig gutes Resultat zu erhalten. Und wenn doch mal ein gutes Resultat vorkommt, sind auf jeden Fall die Aktivitäten, Fäkalienmaterial aufzusammeln, zu transportieren und zu entleeren immer unerwünschte und unangenehme Arbeiten, die immer mit einem Risiko für die Umwelt und die Gesundheit verbunden sind.

Es lässt sich klar absehen, dass eine Behandlung mit Abbau des Fäkalienmaterials immer die beste, einfachste, sauberste und innovativste Lösung sowie die beste Art und Weise zum Abscheiden der Restmaterialen des menschlichen Metabolismus ist.

Systeme, die das Abwasser sterilisieren, sind bereits in Gebrauch. Die durch Zerkleinern, Elektrolyse oder Chlorzugabe und nachträgliche Mischung des organischen Materials mit allen Mikroorganismen, Abwasser und zusätzlichem Wasser erhaltene Lösung, wird durch eine starke Oxydation steril gehalten.
Der organische Gehalt des Abwassers wird aber mit diesem Prozess nicht verbessert, sondern im Gegenteil, eine sterile Fäkalienlösung kann wohl das Risiko einer Kontamination von Pathogenen verhindern oder hemmen, aber das sterile Abwasser, zusammen mit einem Chlorgehalt ist nicht umweltfreundlich. Im Gegenteil, es muss erst mit neuen Mikroorganismen besiedelt werden, um dann erst abgebaut zu werden. Die Zeit dafür ist selbstverständlich erheblich länger.

Dieses System beruht jedoch auf der Täuschung, daß eine große Menge Frischwasser zusammen mit einem kleinen Anteil der sterilen Fäkalienmasse gemischt wird, und das auslaufende Abwasser ein sauberes und schönes Aussehen hat, obwohl es im Grunde noch immer ein sterilisiertes Fäkalienabwasser mit Chlorgehalt ist und den CSB- Wert der Umgebung erhöht. Der CSB ist ein Maß für die Summe aller organischen Verbindungen im Wasser, einschließlich der schwer abbaubaren. Der CSB-Wert kennzeichnet die Menge an Sauerstoff, welche zur Oxidation der gesamten im Wasser enthaltenen organischen Stoffe verbraucht wird in mg/l oder g/m³.

Halbbiologische Systeme machen einen aerobischen Abbau, eine kleine Filtration und eine nachträgliche Sterilisation des Abwassers, mit dem Ausstoß eines relativ sauberen Abwassers mit kleinerem CSB- Wert, aber dieses ist sterilisiert, chlorhaltig und umweltunfreudlich.

Außer den vorher beschriebenen Systemen oder Kläranlagen werden in anderen Bereichen auch andere und sehr gute Systeme zum Fäkalienabbau verwendet. Das meist gebrauchte und bekannteste System mit Millionen Einheiten weltweit in Betrieb, die von kleinen bis zu riesigen Anlagen gebaut werden und mit sehr unterschiedlichen Abwasserqualitäten und Konzentrationen arbeiten, sind die 'Aktivierten Klärschlammsysteme'.

Sie verwenden eine Technik, in der große Abwassermengen in große Becken zusammen mit einer schlammigen Lösung gemischt werden. Belüfter, die mechanisch oder pneumatisch Luft zuführen und gleichzeitig das Abwasser mit großen Mengen von Schlammpartikeln mischen, gewährleisten einen effektiven Kontakt der Schlammkörner (die mit Mikroorganismen besiedelt und daher biologisch aktiviert sind) mit dem Abwasser und seinem organischem Inhalt.

Die Absorptions-/ Adsorptionsfähigkeit des Schlammes und seine biologische Besiedlung gewährleistet, dass die Mikroorganismen ihre Nahrung von dem organischem Fäkalienmaterial aufnehmen. Bei einem ausreichendem Sauerstoffgehalt des Abwassers bauen die Mikroorganismen das Fäkalienmaterial in Kohlendioxyd und Wasser ab. Diese Anlagen mit all ihren Vorteilen können leider in kleineren oder kompakten und mobilen Einheiten nicht gebaut werden und sind wegen ihrer größeren Dimensionen für kleinere Kapazitäten nicht wirtschaftlich.

Die Patentschrift FR 2 848 178 beschreibt ein kompaktes System zur biologischen Reinigung von Fäkalienwasser auf Booten welches eine mechanische Filtration und die Verwendung getauchter Festbetten umfaßt.

Die vorliegende Erfindung hat als Basis die Aufgabe, unangenehme Gerüche zu vermeiden, einen maximalen Wirkungsgrad in der Abwasserbehandlung in kurzen Abbauzeiten zu bekommen, sodass der Abwasserauslass, d. h. das Ablassen des Abwassers, in bester Qualität, mit minimalster Kontaminierung, umweltfreundlich und ohne Unannehmlichkeiten gewährleistet wird.

Mit dem Konzept einer selektiven Filtration, bei der die Mikroorganismen die insbesondere enormen Oberflächen unterschiedlicher Filtermaterialien besiedeln und das organische Fäkalienmaterial durch eine organisierte Strömung an die besiedelten Oberflächen gebracht und biologisch abgebaut wird, sind sehr kompakte und wirtschaftliche Kläranlagen möglich.

Die Verwendung eines effizienten Aktivkohlefilters mit Wasserabscheidung (Kondenswasser) in der Belüftungsverrohrung entfernt durch Adsorption die Gerüche der gebildeten Gase vom Abbauprozess und verhindert, daß außen am Ausgang Gerüche entstehen.

Da die Verwendung von flexiblen Schläuchen wie z.B. PVC, Gummi usw. für den Einbau der BFBA-Einheit an Stellen mit minimalem Platzbedarf und vielen Widerständen unbedingt benötigt werden, aber wegen der Geruchsmigration problematisch sind, werden diese mit einem anderen flexiblen Schlauch überzogen, insbesondere der durch eine metallspiralartige Konstruktion in E.V.A. oder ähnlichem Kunststoff oder anderer Metallkonstruktionen immer noch flexibel bleiben.

Die Mercaptane werden so mit ihren Gerüchen zwischen den beiden Schläuchen festgehalten und können somit nicht in den Raum gelangen. Als gute und wirtschaftliche Lösung ergänzt dieses Verfahren die umweltfreundliche Biobehandlung des Abwassers.
Der biologische Abbauprozess, in welchem Mikroorganismen die molekulare Struktur des organischen Materials brechen und es in CO₂ und H₂O (CH₄) verwandeln, ist der natürlichste und wirtschaftlichste Weg um das Fäkalienmaterial abzubauen.

Da das Wasser als Transportmittel und aus hygienischen Gründen für das in die Toiletten abgegebenen Fäkalienmaterials verwendet wird, kann das Abwasser verschieden große Änderungen des organischen- und Wassergehaltes haben. Das aerobische Verfahren verbessert den Abbau der organischen Stoffe des Abwassers und tauscht die Methanproduktion von der Anaerobyose durch den Abbau in Kohlendioxyd und Wasser. Dies führt auch zu einer Minderung der Gerüche und einem schnelleren Abbau.

Die Erfindung umfasst eine biologische Fäkalienwasserbehandlung, die eine selektive Filtrierung als Prinzip und eine Sequenz von Abscheidungen in bestimmten Zonen aufweist, insbesondre wobei dies sehr kompakte und dennoch hoch wirksame Anlagen zu bauen erlaubt.

Die Anlagen können mit diesem Verfahren allgemeine organische Stoffe abbauen und umfassen als Basis oder unabhängige Einheit einen Bioreaktor (A) der auch die erste Stufe der kompletten Anlage ist.

Sie umfasst ein äußeres Gehäuse (1) oder Struktur, ein Filtrations- und Fragmentierungselement (2) von festen Stoffen, einen zentralen Abwasserverteiler (3 ) und ein Belüftungselement (4), das längsweise an das Filtrationselement (2) angepasst ist.

Das Gehäuse (1) vom Bioreaktor (A) hat vorzugsweise einen transversalen Schnitt mit der Form eines abgerundeten Dreieckes, welches nach dem Einbau des zylindrischen Fragmentations- und Filtrationsfilters (2) drei größere Zonen an den Kanten des Dreiecks bildet und zu einer besseren Verteilung und Sammlung des gefilterten Abwassers führt.

Durch die Position vom Belüfter (4) und den drei Verteilungszonen erzeugt man verschiedene Sauerstoffkonzentrationen. Die Zone von maximaler Sauerstoffkonzentration und respektive Oxydation ist genau an der unteren Kante (V1) der Basis des Dreiecks, wo sich der Belüfter (4) befindet.

An dem unteren Teil des Gehäuses, aber an der entgegen gesetzten Kante (V2) der Basis des Dreiecks, ist die Sauerstoffkonzentration minimal und eine anoxische Zone wird so gebildet, dass in der Zone die Mikroorganismen, da ihnen der Sauerstoff fehlt, diesen Sauerstoff von anorganischen Stoffen wie SO, SO₂, NO, NO₂ erzeugen und eine Denitrifikation und Entschwefelung des Abwassers durchführen, die auch zur Reduktion des Geruches führt. Die obere dritte Kante sammelt die hinein gepumpte Luft und das gefilterte Fäkalienwasser und hat einen bevorzugt zentralisiert gelegenen Ausgangsstutzen (7), aus dem das behandelte Abwasser jetzt mit einem kleinen Anteil von Feststoffen und reduziertem CSB Wert herausläuft.

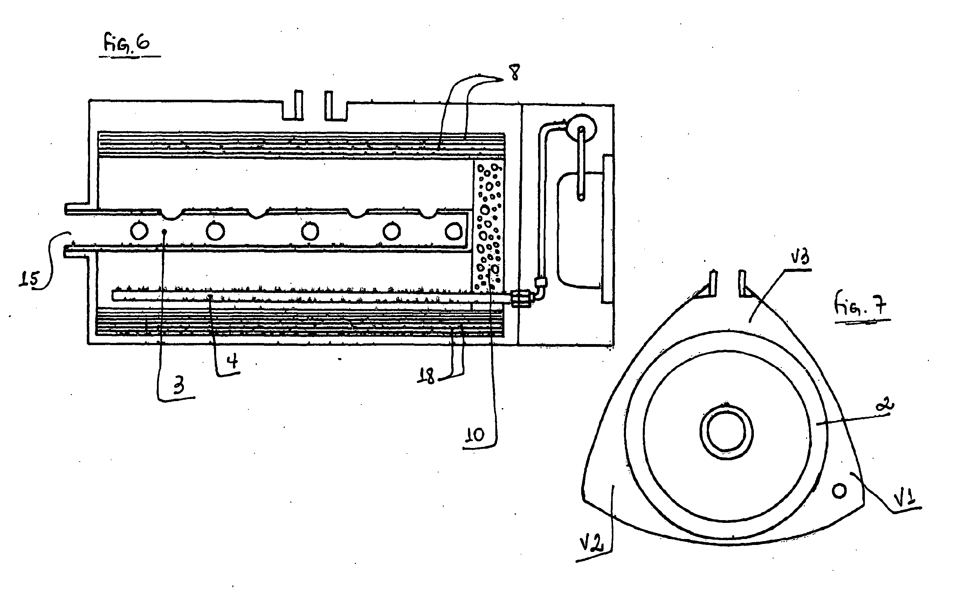

Das Fragmentations- und Filtrationselement (2) umfasst ein Filtrierelement (8 - Fig. 6) insbesondere in Form von Sieben mit kleinen Öffnungen, in denen z.B. PP - Siebe, die kleine Löcher und scharfe Kanten haben, und bevorzugt wie ein Schneckengehäuse (8 ) gefertigt werden und wenigstens ein (ausreichender) Spalt (18) zwischen den Sieben gehalten wird, sodass eine Notströmung entstehen kann, falls eine Verstopfung des Siebes vorkommt und die Notströmung dann auch die mikroorganischen Ansammlungen verteilen kann, die verantwortlich sind für das Reinhalten des Siebes (8 ).

Je größer die biologische Aktivität auf dem Sieb ist, um so sauberer bleibt es, und eine bevorzugte Strömung des Abwassers sorgt für mehr Nahrung für die entsprechenden aktiven Mikroorganismen.

Das kontinuierlich fein fragmentierte Fäkalienmaterial wandert zwischen den kleinen Löchern des Siebes (8) und/oder den Notströmungsspalten (18) und verteilt sich homogen an der Oberfläche der Siebe und bildet so eine große Reaktionsoberfläche zwischen dem festen und flüssigen Inhalt des Abwassers, sodass eine Beschleunigung des Abbauprozesses und der Auflösung der organischen Stoffe erreicht wird.

Zum Schluss wird eine kleine Kammer am Ende des insbesondere zylindrischen Fragmentationsfilters (2) mit einem Adsorptionsmaterial, wie z.B. Aktivkohle, gefüllt mit der Funktion, die Mikroorganismen, wie z.B. Bakterien, vor Bakteriziden oder längerem Stillstand des Systems zu schützen, damit die speziellen und prädominierenden Mikroorganismentypen später das System wieder bevölkern können.

Mit dem Bioreaktor (A) als Grundstein und erster Stufe haben wir die Oxydationskammer (B) als zweite Stufe, die innerhalb des Gehäuses, das die externe Struktur darstellt und alle anderen Elemente und respektive Verrohrungen umgibt und noch ein freies Volumen von über einer täglichen Abwasserproduktion als Minimum zur Verfügung hat und einem minimalen Wert für einen grundsätzlichen Abbau entspricht.

Dieses externe Strukturgehäuse (E) ist ein geschlossener und abwasserdichter Behälter mit einer Größe und Form, die für jede Anwendung und Kapazität je nach Platzbedarf angepasst werden kann. Aus seinem freien inneren Raum besteht die entsprechende Oxydations- und Aufbewahrungskammer (B).

Mit einer Füllung (11), das heißt z.B. einer gesponnenartigen Wolle, die meistens aus Polyamid, PP, PE oder irgendeinem anderen chemikalienbeständigen Material gespritzt oder an der Drehbank gespänt wird, sodass das gesamt betragende Volumen aus einem Minimum von 90 % beziehungsweise 95 % aus freien Plätzen besteht (Dichte von 50 bis 100 kg/m3), die mit dem vorbehandelten Abwasser des Bioreaktors gefüllt wird , erfolgt eine nochmalige Behandlung des Abwassers dadurch, dass die vorhandenen, insbesonderen riesigen, Außenoberflächen der Filamente (Späne) sich mit einem Biofilm beschichten, d.h. einem insbesondere gelatineartigen Material, das mit Trillionen von Mikroorganismen besiedelt ist. Diese Späne (11) bilden ein riesiges Labyrinth, das unerwünschte und präferenziale Abwasserströmungen verhindert und so das Abwasser zwingt, durch das Labyrinth zu strömen und einen intensiven Kontakt zwischen Abwasser und organischen Stoffen mit den bevölkerten Spänenoberflächen zu halten. So belässt das Abwasser die Feststoffe zwischen den Filamenten zusammen mit den Mikroorganismen, die sie dann bevölkern und sich vom organischem Material ernähren.

Wegen der sehr geringen Geschwindigkeit des Durchflusses des Abwassers zwischen diesem Labyrinth, wird der größte Anteil des organischen Materials hier abgeschieden und von den Mikroorganismen in CO₂ und H₂O verwandelt.

Der Sauerstoff, der nötig ist, damit die Bakterien und andere Mikroorganismen die organische Stoffe oxydieren können, wird unter dem dritten Element, einem Feinfilter ( C), der das Restmaterial auffängt, durch einen oder mehrere Belüfter (12) zugeführt, insbesondere die meistens aus Neopren, EPDM oder anderen elastischen Schläuchen bestehen können, die mit einer Vielzahl, insbesondere tausenden kleinen Löchern versehen sind und so den Sauerstoff in einer Vielzahl, insbesondere tausenden kleinen Luftblasen entweichen lassen, die in einer hochströmenden Richtung durch den Feinfilter (C) und danach den ganzen Oxydationsraum (B) von unten bis oben den Sauerstoffgehalt erhöhen und den von dem Mikroorganismen verbrauchten Sauerstoff ersetzen.

Das dritte Element, das die biologische Fäkalienabwasserbehandlung ergänzt, ist der Feinfilter (C), der sich normalerweise am unteren Teil des Behälters und unter der Oxydationskammer (B) befinden kann.

Der Feinfilter umfasst ein granuliertes adsorptives Material, das zwischen zwei Siebschichten, die normalerweise gefaltet gefertigt werden können, damit eine größere Durchflussoberfläche vorhanden ist, eine gewisse Schicht und Masse Adsorptionsmaterial, wie Aktivkohle, als Grenzfläche darstellt.

Das Abwasser, das jetzt schon in der ersten und zweiten Stufe behandelt und verflüssigt ist, wird jetzt gezwungen mit einer langsamen Geschwindigkeit diesen Filter zu durchströmen und hinterlässt dort die Reststoffe, die in den anderen zwei Elementen nicht aufgefangen und abgebaut worden sind, insbesondere die hauptsächlich Urin, Harnstoff und Toxinen umfassen.

Dank der ausreichenden Belüftung bevölkert eine große Menge von Mikroorganismen den Adsorptionsfeinfilter, der sie gleichzeitig gegen Bakterizide schützt und mit Nahrung versieht, indem sie auch gleichzeitig das Adsorptionsmaterial kontinuierlich regenerieren und ihn immer im Stande lassen, die Unreinheiten des Abwassers adsorptiv zu entfernen und somit dem ausgehenden Abwasser höchste Qualität zu verschaffen und es nahezu ohne organische Stoffe und Mikroorganismen abzulassen, welches dem Hauptziel des Systems entspricht.

Dieses behandelte Abwasser kann danach von einer Pumpe (13), die in einem eigenen Gehäuse (19) im Inneren des Behälters (E) direkt von der Nachfilterkammer (14) unter dem Feinfilter (C) angeordnet sein kann, zum Ausgang (13b) ausgepumpt und/ oder zur Nachfiltrierung gebracht werden.

Das Abwasser kann, falls eine Verstopfung des Feinfilters und/ oder des Versagens der Pumpe, mit der Förderung über die eigene Toilettenpumpe durch den Notausgang (17 ) der in der Oxydationskammer (B) kurz über dem Feinfilter (C) angebracht ist, fließen.
Das automatische Ein- und Ausschalten der Pumpe (13) kann durch eine Niveaukontrolle (20) gesteuert werden, insbesondere um einen Luftraum von einigen Zentimetern am oberen Teil des Behälters zu schaffen, insbesondere wobei sie eine Füllung zwischen 90 und 95 % des Gesamtvolumen des Systems regelt.

Im Falle von Anlagen, die im Freien stehen und/ oder auch bei denen viel Platz zur Verfügung steht, wie z.B. Ölplatformen, Marinas, Gasthäusen, Hotels etc. wird die beschriebene vollkommen kompakte Anlage, dessen Elemente/ Komponenten sich innerhalb der Außenhülle befinden, nicht benötigt. In diesen Fällen werden der Bioreaktor (A), die Oxydationskammer (B) und der Feinfilter (C) unabhängig und individuell gebaut und auf einer Basis oder Struktur fixiert und über Rohre miteinander verbunden. In diesen Fällen ergibt sich die Sauerstoffzufuhr durch optionale Belüfter und hauptsächlich durch einen Belüfterturm, in welchem die Abwassereinsprühung und eine Wasserströmung, die an der Innenwand des Zylinders aufgefangen wird und danach an seitlichen Ringen kaskadenartig abwärts fließt, und somit große Mengen Sauerstoff dem Abwasser zuführt.

Die Erfindung kann auch noch verbessert werden mit dem Einsetzen und der Ergänzung einiger Zusatzeinrichtungen, wie z.B. ein System, das an dem Abluftausgang Luft durch eine Vakuumpumpe oder ähnliches einen Unterdruck im ganzen System und auch in den Schläuchen gewährleistet und so eventuelle Undichtigkeiten und auch die Geruchspermeationen durch die Schlauchwände verringert.

Oder durch eine Produktion und Einsetzung spezieller Späne (11), hergestellt im Spritzverfahren, in dem das weiche und heiße Plastikmaterial durch geformte Düsen gepresst und im Kühlraum mit Aktivkohlepulver oder einem ähnlichen Adsorptionsmaterial eine feine Schicht über diese noch heißen und weichen Spänen überzogen wird. Diese Verbesserung dient dazu, eine stärker adsorptive Oberfläche des Labyrinths und des spänenartigen Filtermaterials zu schaffen, um verstärkt Nahrung ( organische Stoffe) anzuhalten und so größere Mengen von Mikroorganismenbesiedlungen zu schaffen.

Die Ergänzung des Systems mit einer kleinen Umwälzpumpe, die gleichzeitig eine Belüftung und Rezirkuliererung und Nachfiltration des Abwassers, das kontinuierlich oder sporadisch das saubere Abwasser vom Ausgang wieder in den Eingang der Anlage einführt, führt zu einer Anreicherung der Sauerstoffkonzentration und durch die Wasserbewegung zu einer homogeneren Verteilung der organischen Stoffe und der Mikroorganismen und somit zu einer verbesserten Abwasserqualität.

Auf diese Weise kann das menschliche organische Restmaterial, das über die Toiletten entsorgt wird, durch Schläuche oder Rohre zu einem Bioreaktor (A) geführt und durch einen zentral gelegenen Verteiler (3) in das Filtrier- und Fragmentierelement (2) geführt werden, wo die Feststoffe durch scharfe Kanten im Filtersieb (8 Fig. 6) in kleine Fragmente zerkleinert, gleichmäßig über die gesamte Oberfläche des Filtersiebes verteilt werden, eine große reaktive Oberfläche zwischen den Fragmentteilchen und Wasser erzeugen und dadurch den biologischen Abbau beschleunigen und eine Verflüssigung und Verwandlung in CO2 und H2O des Feststoffes verursachen.

Das so behandelte Abwasser wird zum Ausgangsstutzen (7) vom Bioreaktor (A) geführt, durch welchen es zur Oxydations- und Auffangkammer (B) fließt und danach sehr langsam durch die labyrinthartigen Späne wandert, um einen unerwünschten Wasserfluss zu vermeiden und das Abwasser zu zwingen, langsam durch die Späne zu fließen und dort auf ihren großen Oberflächen das noch vorhandene organische Material zu sammeln und mit Mikroorganismen zu versehen.

Dieses Material wird dann durch die biologische Aktivität in CO₂ und H₂O verwandelt. Nach dieser Biooxydation muss das schon feststofffreie Abwasser durch den Feinfilter ( C) fließen.

Hier werden flüssige organische Stoffe wie Urin, Harnstoff und Toxine adsorptiv festgehalten und durch eine reiche Bevölkerung von Mikroorganismen, die mit einem hohen Sauerstoffgehalt diese für sie geeignete Nahrung vom adsorptiven Material abbauen, wird der Filter gleichzeitig regeneriert.
Das Resultat ist ein sauberes und kontaminationsfreies Abwasser.

Durch die Eigenschaften dieser Erfindung werden eine große Anzahl von Vorteilen ermöglicht, von welchen nur einige erwähnt werden sollen:
- Die Minimierung der Anlagengröße ermöglicht die Verwendung in fast allen Booten, Wohnwagen, Heimmobilen, Caravans, Bussen, Zügen, mobilen Toiletten und anderen Anwendungen, wo der Platzbedarf limitiert ist.
- Da das Fäkalienmaterial zusammen mit Urin in CO₂ and H₂O abgebaut wird und eine Zeit von ca. 20 bis 24 Stunden benötigt werden, können diese Anlagen bedeutend kleiner als Fäkalientanks gebaut werden, da diese heute durchschnittlich für drei Tage Aufbewahrung. d. h. 72 Stunden, kapazitiv begrenzt sind.
- Das biologisch behandelte Fäkalienabwasser kann wegen seines Verfahrenkonzeptes kontinuierlich abgelassen werden oder falls gewünscht in einem Vorgang ausgepumpt werden.
- Dank der vorhandenen Qualität des behandelten Abwassers, das jetzt keine Feststoffe mehr enthält, und frei von Chlor oder Sterilisationsmaterial ist und niedrige CSB Werte hat, ist das Abwasser total lösbar in Salz- oder Süßwasser und muss deshalb nicht weit im offenen Meer oder in Marinas abgelassen werden, da es in der Umwelt ohne Schäden entsorgt werden kann, und da es 100 % ig in einem Radius von 10 m und 10 m Tiefe zum Auslass eine Verdünnung von 1 : 1 000 000 hat.

- Dieses System verwendet nur natürliche Resourcen, braucht ein Minimum an Energie und entlastet die Umwelt von Kontaminationen.
- Die Verwendung von einer selektiven und progressiven Filtration ergibt gute Qualitätswerte vom abgelassenen Abwasser auch in sehr kompakten Systemen. Im spezifischen Fall der Kompaktkläranlagen sind alle Rohre, Hauptelemente und andere Komponenten innerhalb des Gehäuses (E) montiert, das auch wie ein Reservoir die Toilettenablässe bis zur Füllung aufbewahrt und gleichzeitig behandelt und dann teilweise das schon saubere Abwasser auspumpt.
- Limitierte Verwendung von äußeren Fittings und Schläuchen, daher weniger Risiko von Undichtigkeiten.
- Mit der Verwendung von Filament-/Spanmaterial bekommt man einen Interceptionseffekt mit Adhäsion von organischen Material, eine Bildung von Biofilmen für die Beschleunigung des biologischen Abbaus, und das labyrinthartige Verfahren, das die Strömung regelt und unerwünschte Wege des Abwassers verhindert.
- Durch die Zuführung kleinster Luftblasen verringert sich die Wasserbewegung und ein besserer Sauerstoffgehalt des Abwassers und der aerobischen Reaktionen wird so erzeugt.
- Die selektive Filtrierung in 3 Stufen teilt das System in 3 verschiedene Behandlungszonen und vermittelt eine homogene Bioaktivität, in dem sich Siedlungen von speziellen Mikroorganismen in jeder Zone bilden und so die Biodegradationszeit reduzieren..
- Die Feinfiltration der letzen Stufe entfernt flüssige Kontaminationen.
- Verbesserung der gesamten Abwasserqualität durch Umwälzung und Refiltration.

Für eine detaillierte Beschreibung der Erfindung sind verschiedene Zeichnungen wie folgt vorhanden:

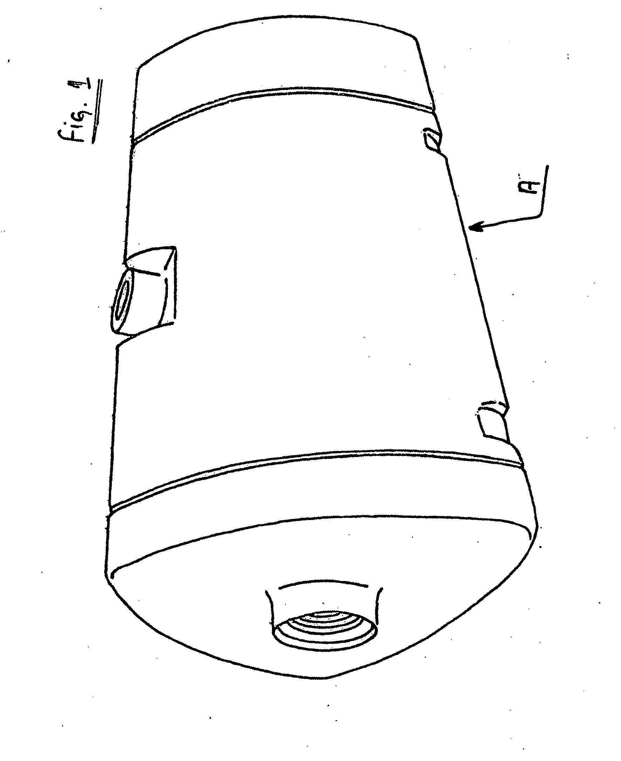

Figur 1 zeigt eine Außenansichtsperspektive der basischen Anlage oder Bioreaktors (A) in seiner Form mit fertiger Ausstattung.

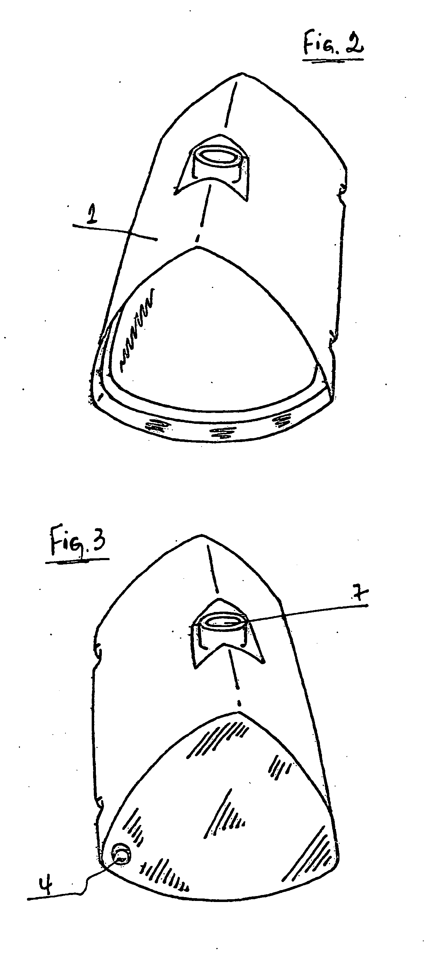

Figur 2 zeigt eine Außenansichtsperspektive des Gehäuses (1) der basischen Anlage oder Bioreaktors (A) vor dem Einbau des Fragmentations-/Filtrationselementes (2).
Figur 3 zeigt eine Außenansichtsperspektive des Gehäuses (1) der basischen Anlage oder Bioreaktors (A), nachdem das Fragmentations-/ Filtrationselement (2) eingebaut ist, schon mit der entsprechenden Abdichtung, mit Sicht auf den Belüftereingang (4) in einer der Ecken der Basis des Dreiecks und den Ausgangsstutzen (7) für das Abwasser.

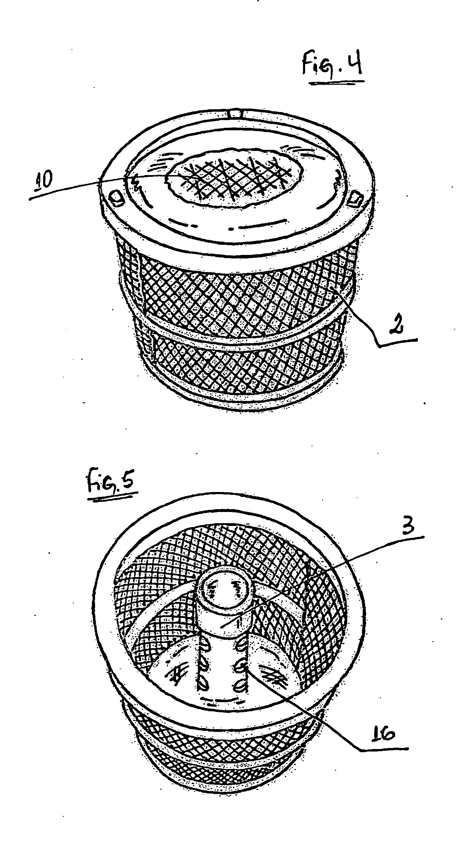

Figur 4 zeigt eine Außenansichtsperspektive des Fragmentierungs-/Filtrationselementes (2) mit Sicht auf seine Endseite, den Raum mit Adsorptionsmaterial, der als Bakteriennest (10) für das Überleben der prädominanten Mikroorganismen dient.
Figur 5 zeigt eine Innenansichtsperspektive vom Fragmentierungs-/Filtrationselement ( 2) mit Sicht auf den zentralliegenden Abwasserverteiler (3) mit seinen seitlichen Öffnungen (16) zur Einführung des zu behandelnden Abwassers in die Innenseite des Elements (2).
Figur 6 zeigt einen Längsschnitt des Bioreaktors (A) mit Sicht auf den zentral angebrachten Abwasserverteiler (3) mit seinem äußeren Eingangsstutzen (15), die Filtrierelemente (8), die aus Sieben mit einer Notöffnung (18) in Form einer Schnecke bestehen und an ihrem hinteren Ende einen Schutzraum (10) für das Überleben der Mikroorganismen besitzen.
Figur 7 zeigt einen transversalen Schnitt (Querschnitt) des Bioreaktors (A) mit Sicht auf die Innenseite und das Fragmentations-/Filtrationselement (2) sowie hauptsächlich die maximal belüftete Zone (V1 zu V3) und anoxische Zone (V3 zu V2).

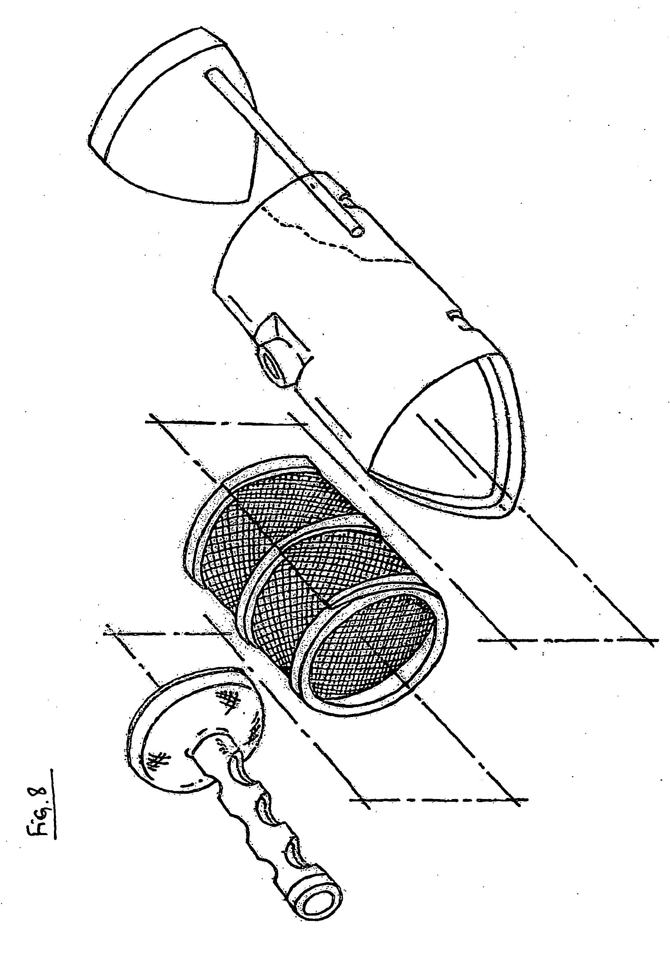

Figur 8 zeigt eine Perspektive der Montage-Phasen des Fragmentations-Filtrationselements (2) im Inneren des Gehäuses (1) zur Bildung des Bioreaktors (A).

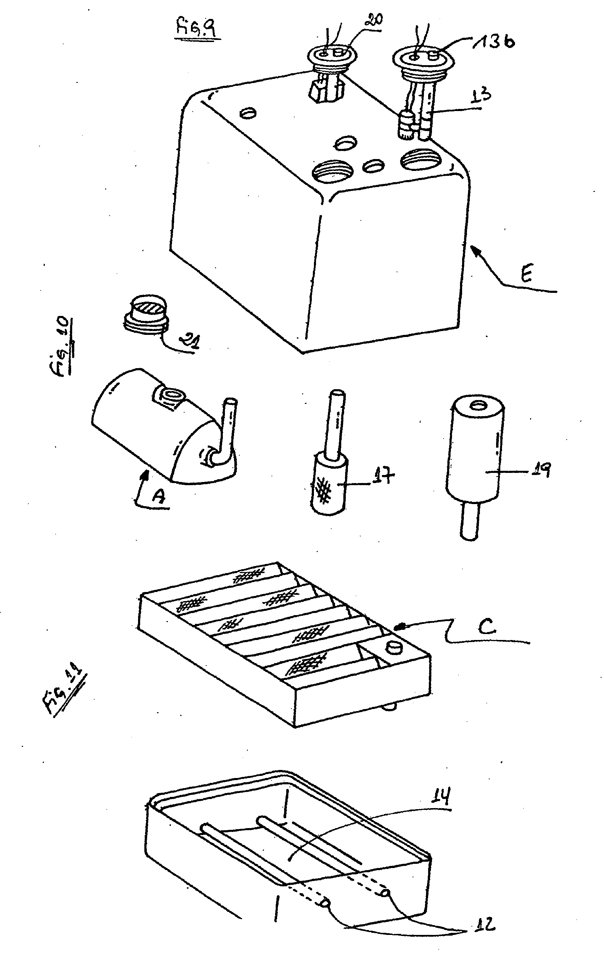

Figur 9 zeigt eine Perspektive der in das Innere des Anlagengehäuses (E) einzusetzenden Elemente und die Bohrungen an dem Gehäuse für die später einzubauenden hydraulische Fittinge. Speziell dargestellt wird die Sicht auf die Pumpe (13) und die für den Einbau vorgesehene Niveaukontrolle (20).
Figur 10 zeigt die inneren Elemente der Abwasserbehandlungsanlage (E) mit spezieller Sicht auf den Bioreaktor (A), den Luftausgangsfilter (21), den Notausgang (17), das Pumpengehäuse (19) und die Pumpe (13).
Figur 11 zeigt eine Perspektive der Komponenten des Gehäuses (E): den einzusetzenden Feinfilter (C), die Auffangkammer für das behandelte Abwasser (14) und den tubenartigen Belüfter (12).

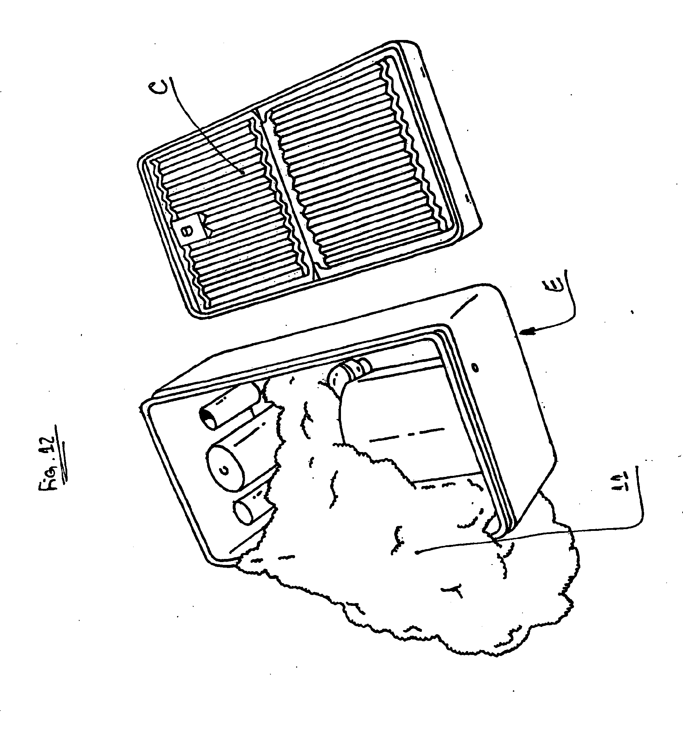

Figur 12 zeigt das Gehäuse (E) der Anlage, halb montiert mit seinen inneren Elementen, die schon eingebaut sind, und die Kunststoffspänenwolle (11), halb eingeführt in den Oxydationsraum (8), und den Feinfilter (C), der über der Auffangkammer montiert wird.

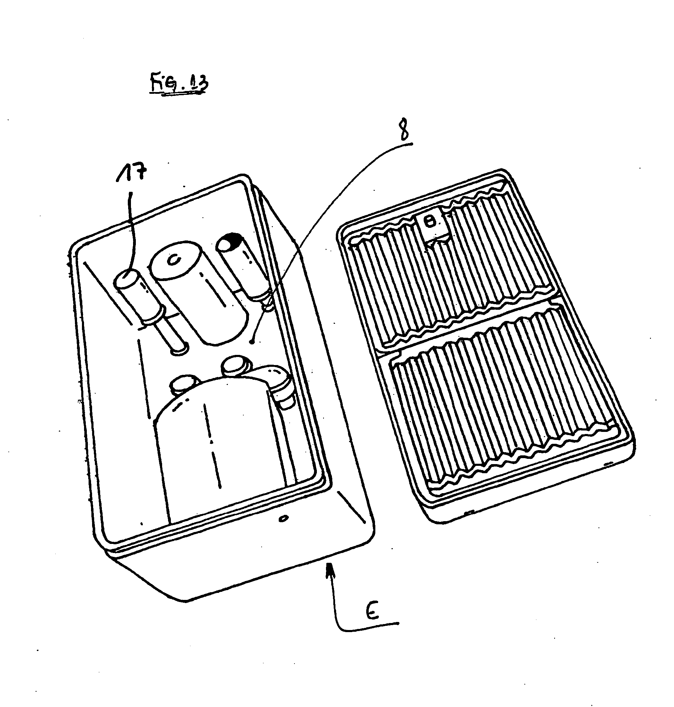

Figur 13 zeigt das Fäkalienabwasserbehandlungsanlagengehäuse (E), halb montiert mit seinen inneren Elementen, die schon eingebaut sind, mit Ausnahme der Kunststoffspänenwolle (11), und lässt den Notausgang (17) und hauptsächlich die Oxydations-/Auffangkammer (B) erkennen.

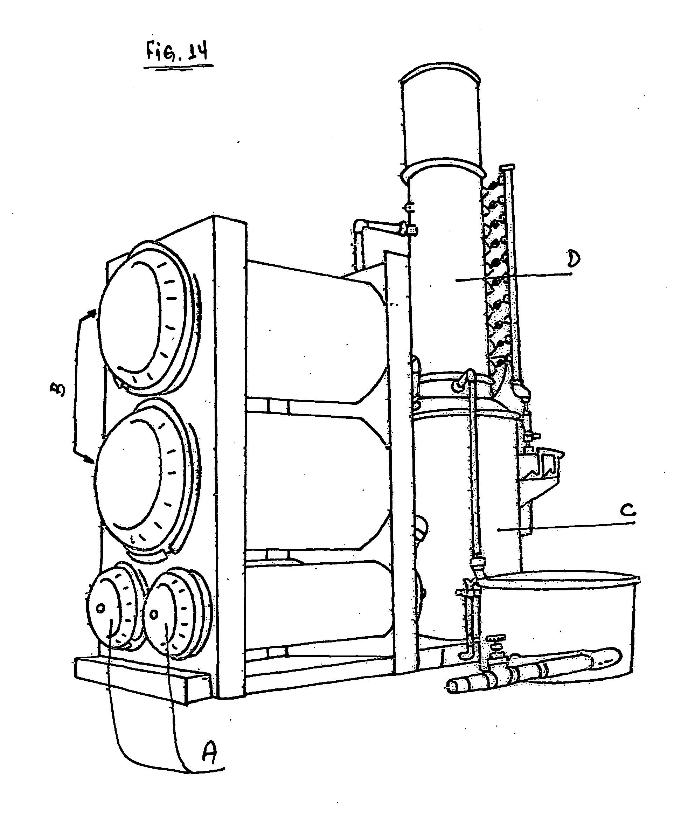

Figur 14 zeigt eine biologische Fäkalienabwasserkläranlage, die nicht klein und kompakt gestaltet, sondern für größere Abwassermengen konstruiert ist. Sie zeigt die einzelnen Gehäuse, die für die erste Stufe oder Bioreaktor (A), die zweite Stufe oder Oxydationskammer (B), die dritte Stufe oder Feinfilter (C) und den Belüftungsturm (D) vorgehen sind.

Der Prozess und das System sowie der Gegenstand der Erfindung, sind nicht nur auf die Kompaktanlage, die hier beschrieben ist, limitiert, sondern sind auch als eine biologische Fäkalien- und Abwasserbehandlungsanlage zu verwenden, die bei jeglichen Bedingungen angewendet werden kann, je nachdem ob viel oder wenig Platz vorhanden ist, ebenso, wenn Gegenstände die Montage beeinflussen und spezielle Anfertigungen für die Struktur und Größenänderungen notwendig sind. Auch sind keine Begrenzungen vorhanden für Platzlimitationen und/oder größere Kapazitäten. Größere Anlagen mit dimensionellen Anpassungen lassen sich konstruieren, indem aber immer die hier beschriebenen Charakteristika zur Anwendung kommen müssen.

## Patentansprüche

1. Fäkalienabwasserbehandlungsanlage mit selektiver Filtration in bestimmten Sequenzen und/oder Zonen,
■ mit einer ersten Stufe umfassend ein Gehäuse (1), Filtrations-/Fragmentierungselemente (2), welche Feststoffe anhalten, einen Fäkalienabwasserverteiler (3) und einen Belüfter (4), der längsweise des Filterelementes (2) angeordnet ist und
■ mit einer zweite Stufe umfassend eine Oxydations- und Auffangkammer mit einer labyrinthartigen Kunststoffspanwolle, die von einem äußeren Gehäuse (E) umgeben ist und die eine freies Volumen aufweist, sodass das Abwasser eine Zeit für den Abbau zur Verfügung hat, sowie
■ mit einer dritten Stufe umfassend einen Feinfilter (C) und/oder Adsorptionsmaterialfilter, der das vorbehandelte Abwasser der ersten und zweiten Stufe zugeführt bekommt, welches durch sein Adsorptionsmaterial fließt und dort die Kontaminierungen, die von der ersten und zweiten Stufe/ Elemente nicht aufgenommen und verarbeitet worden sind, abscheidet und abbaut,
**dadurch gekennzeichnet, dass** in der erste Stufe im Fragmentations-/Filtrationselement (2) ein fester Stoff eingesetzt ist, der wenigstens ein Filtrierelement (8) in Form wenigstens eines Siebes mit Löchern aufweist, das schneidende und scharfe Kanten für eine Fragmentierung von festen Stoffen hat und wobei das wenigstens eine Sieb schneckenartig aufgebaut ist, indem zwischen dem Siebmaterial Zwischenräume (18) vorgesehen sind, wobei die Zwischenräume (18) bei einer Verstopfung des wenigstens einen Siebes eine Strömung zur Verteilung mikroorganischer Ansammlungen zulassen.

2. Fäkalienabwasserbehandlungsanlage nach Anspruch 1, **dadurch gekennzeichnet, dass** das Fragmentations-/Filtrationselement (2) in einer der Seiten einen Raum als Bakteriennest aufweist, der für das Überleben der Mikroorganismen mit adsorptiven Material gefüllt ist und Mikroorganismen gegen Biozide schützt (10).

3. Fäkalienabwasserbehandlungsanlage nach einem der vorherigen Ansprüche,
**dadurch gekennzeichnet, dass** das Gehäuse (1) der ersten Stufe im transversalen Querschnitt eine im wesentlichen dreieckige Form,aufweist und mit dem darin eingebauten zylindrischen Fragmentations-/Filtrationselement (2) drei Zonen ausbildet und eine Sammlung und Verteilung des durch das Fragmentations-/Filtrationselement (2) strömenden Abwassers und durch die Positionierung des Belüfters (4) in einer der unteren Kanten der Basis des dreieckigen Gehäuses (1) die Bildung von unterschiedlichen Sauerstoffkonzentrationszonen schafft, wobei eine Zone mit maximaler Sauerstoffkonzentration an der Kante (V1) der Basis des Dreiecks vom Belüfter bis zum Ausgang angeordnet ist, und eine Zone in der entgegengesetzten Kante (V2) der Basis des Dreiecks bis zum Ausgang die minimale Sauerstoffkonzentration mit einem anoxischen Verhalten annimmt, wo durch Mikroorganismen, die dort unzureichend Sauerstoff bekommen, Sauerstoff aus Oxyden wie SO, SO₂, NO, NO₂ erzeugt und so eine Denitrifikation und Entschwefelung durchgeführt wird, wobei eine Zone an der dritten Kante des Dreiecks die eingepumpte Luft und das erststufig behandelte Abwasser bekommt, das durch den oberen Ausgangsstutzen (7) fließt.

4. Fäkalienabwasserbehandlungsanlage nach einem der vorherigen Ansprüche ,
**dadurch gekennzeichnet, dass** die erste Stufe einen zentralisierten Abwasserverteiler (3) aufweist, der innerhalb des Fragmentations-/ Filtrationselementes (2) positioniert ist und außerhalb des Gehäuses (1) einen Eingangsstutzen (15) hat, dem das Abwasser von einer oder mehrerer Toiletten durch angeschlossene Rohre oder Schläuche zugeführt ist, wobei der Abwasserverteiler Öffnungen (16) aufweist, zur Verteilung des Fäkalienabwassers innerhalb des Fragmentations-/ Filtrationselementes (2).

5. Fäkalienabwasserbehandlungsanlage nach einem der vorherigen Ansprüche,
**dadurch gekennzeichnet, dass** die erste Stufe einen Belüfter (4) aufweist, der längsweise des Filters (2) angeordnet ist und aus einem tubenartigen Element aus einem elastischen Material besteht, das eine Vielzahl von Löchern hat und mit einer Luftzufuhr eine Vielzahl von Blasen erzeugt, die in auftreibender Strömung von der Zone höchster Sauerstoffkonzentration (V1) den runden Fragmentations-/ Filtrationsfilter umschwimmen und sich in der oberen dritten Zone (V3) sammeln, die einen zentralisiert gelegenen Ausgangsstutzen (7) aufweist.

6. Fäkalienabwasserbehandlungsanlage nach einem der vorherigen Ansprüche,
**dadurch gekennzeichnet, dass** die zweite Stufe mindestens ein externes Gehäuse (E) aufweist, welches alle Elemente der Fäkalienabwasserbehandlungsanlage umfasst, insbesondere die erste Stufe und dritte Stufe, alle Fittinge und Rohre zwischen ihnen und die Elemente der Pumpe (13), Niveaukontrolle (20) und Notausgang (17)

7. Fäkalienabwasserbehandlungsanlage nach einem der vorherigen Ansprüche
**dadurch gekennzeichnet, dass** die labyrinthartige Kunststoffspanwolle in der Oxydationskammer (B) zu 90 bis 95% aus leeren Plätzen besteht, die von dem Abwasser gefüllt werden und unerwünschte Abwasserströmungen vermeiden und das Abwasser zwingen, das Labyrinth zu durchfließen und das organische Material zusammen mit den Mikroorganismen auf der Oberfläche zu belassen, wo die Mikroorganismen eine gelatineartige Beschichtung als Biofilm produzieren und dann kontinuierlich die zukommenden organischen Stoffe zersetzen.

8. Fäkalienabwasserbehandlungsanlage nach einem der vorherigen Ansprüche,
**dadurch gekennzeichnet, dass** mittels einer Pumpe ( 13 ), die sich innerhalb eines eigenen Gehäuses (19) befindet und in das durch die Mikroorganismen abgebaute und durch Filtration gereinigte Abwasser getaucht ist, das gereinigte Wasser von dem unteren Teil des externen Gehäuses (B ) unter dem Feinfilter ( C ) oder dritte Stufe dieser Abwasserbehandlungsanlage, direkt als ein behandeltes Abwasser in die Umwelt pumpbar ist.

9. Fäkalienabwasserbehandlungsanlage nach einem der vorherigen Ansprüche,
**dadurch gekennzeichnet, dass** die zweite Stufe einen Notausgang (17) aufweist, durch den das Abwasser im Falle eines Versagens der Pumpe rauslaufen kann oder von einer Pumpanlage in einer Marina abgepumpt werden kann.

10. Fäkalienabwasserbehandlungsanlage nach einem der Ansprüche 1,6 oder 8,
**dadurch gekennzeichnet, dass** die dritte Stufe am unteren Teil des Gehäuses (E) gleich nach der Oxydationskammer ( B ) angeordnet ist und ein granuliertes Adsorptionsmittel zwischen zwei Siebschichten aufweist, die zur Bildung einer größeren Durchflussoberfläche gefaltet sind und wobei das Fäkalienabwasser, das schon in der ersten und zweiten Stufe behandelt und verflüssigt worden ist, gezwungen ist, diesen Filter zu durchströmen und dort die Reststoffe, die in den anderen zwei Stufen nicht aufgefangen wurden, festgehalten und abgebaut werden.

11. Fäkalienabwasserbehandlungsanlage nach einem der Ansprüche 1,6,7,8 oder 10, **charakterisiert durch** den Feinfilter (C ), der durch das Einsetzen unterhalb seines gefalteten Siebes eine Belüftung (12 ) bildet, die Sauerstoff durch einen mikrodurchlöcherten Schlauch mit Mikroblasen produziert, die von dem unteren zum oberen Teil des Gehäuses ( E ) durch die Oxydationskammer (B) gelangen und den Feinfilter ( C ) mit einer ausreichenden Sauerstoffproduktion versorgt zur Ergänzung des biologischen Sauerstoffverbrauches, wobei der Feinfilter einen geschützten Raum für eine reiche aerobische und spezialisierte Mikroorganismenbesetzung bildet, die mit ihrer biologischen Aktivität das Adsorptionsmittel regeneriert und es für immer befähigt, die Reststoffe abzuscheiden.

12. Fäkalienabwasserbehandlungsanlage nach einem der Ansprüche 1 oder 7, **charakterisiert durch** die Filtration über eine Plastikspanwolle, welche durch ein Herstellungsverfahrens **gekennzeichnet** ist, bei dem eine Extrusion anstelle eines Drehprozesses ermöglicht, dass das noch heiße und noch weiche Plastikmaterial mit einem Aktivkohlestaub oder einem ähnlichen Adsorptionsmaterial in Kontakt gebracht wird und sich so das Plastikmaterial mit diesem fein beschichtet, so dass eine Oberfläche der dünnen Späne entsteht, die mit diesen adsorptiven Fähigkeiten eine bessere Effizienz des Auffangens der organischen Materialien und Fixierung von Mikroorganismen aufweist.

13. Fäkalienabwasserbehandlungsanlage nach Anspruch 1, **dadurch gekennzeichnet, dass** zur Minderung von Undichtigkeiten und Durchlässigkeiten von Gerüchen durch Schläuche und Fittings ein Belüftungsausgang (21) vorgesehen ist, durch den eine Absaugung stattfindet, die einen Unterdruck im ganzen System erzeugt und die gebildeten Gase im Gehäuse oder im Oxydationsraum entfernt .

14. Fäkalienabwasserbehandlungsanlage nach einem der vorherigen Ansprüchen,
**dadurch gekennzeichnet, dass** als eine kompakte Anlage ausgebildet ist, wo das gesamte System in einem einzigen Gehäuse ( E ) arbeitet, oder als eine größer dimensionierte Anlagen, wo jede Stufe ( A,B, C, ) in eigenen unabhängigen Einheiten arbeitet ( Fig. 14 ) und die Belüftung durch einen Oxydationsturm ( D ) geleistet wird.

15. Fäkalienabwasserbehandlungsanlage nach einem der vorherigen Ansprüchen,
**dadurch gekennzeichnet, dass** die flexibelen Schläuche überzogen sind, so dass die Gerüche, die durch kleinmolekulare Merkaptane verursacht werden und die durch die Wände flexibler Schlauchmaterialien migrieren und unangenehme Gerüche hinterlassen, in dem Raum zwischen einem inneren und äußeren Schlauch festgehalten sind, wobei der äußere Schlauch aus einen starren Kunststoffmaterial oder aus einem Metall besteht und keine Gerüche durchlässt.

16. Verfahren zur Biofiltration von Abwasser, **dadurch gekennzeichnet, dass** es drei Stufen umfasst, wobei
■ in einer ersten Stufe (A) das feste Material des Abwassers durch einen Fragmentations- und Filtrationsprozess in einem Fragmentationsfilter (2) zerkleinert und auf eine Fläche verteilt wird und mit Belüftung das Wachstum der benötigten Mikroorganismen für den Abbau und die Auflösung der organischen Stoffe beschleunigt wird, wobei das Fragmentationsfilter wenigstens ein Sieb mit Löchern aufweist, welches schneckenartig gefertigt ist mit Zwischenräumen zwischen dem wenigsten einen schneckenartigen Sieb, und kontinuierlich klein fragmentiertes Fäkalienmaterial zwischen Löcher wenigstens eines Siebes und Zwischenräume (18) wandert und sich bei einer Verstopfung des wenigstens einen Siebes eine Notströmung in den Zwischenräumen ergibt, mit welcher die mikroorganischen Ansammlungen verteilt werden und wobei
■ in der zweiten Stufe das vorbehandelte Abwasser in eine Oxidation-/Auffangkammer (B) gelangt und durch eine labyrinthartige Kunststoffspanwolle (11) fließt, in der die organischen Stoffe mit den Mikroorganismen aufgefangen und an den Spanoberflächen verteilt und abgebaut werden, und
■ das jetzt feststoffreie Abwasser die dritte Stufe erreicht, in der es durch einen Feinfilter fließt, sodass dort die flüssigen Reststoffe adsorbiert und schließlich abgebaut werden.

## Claims

1. Sewage treatment system with selective filtration in specific sequences and/or zones,
with a first stage comprising a casing (1), filtration/fragmentation elements (2) that detain solids, a sewage distributor (3), and an aerator (4) running along the length of the filter element (2), and
with a second stage comprising an oxidizing and collecting chamber, with labyrinthine plastic filament wool, that is surrounded by an outer casing (E) and having a free space so that the sewage has a certain time to decompose, and
with a third stage comprising a fine filter (C) and/or adsorption material filter receiving the pretreated effluent from the first and second stages, which flows through its adsorption material, where contaminants that have not been collected and processed by the first and second stages/elements are removed and broken down,
**characterized in that** in the first stage, a solid material is used in the fragmentation/filtration element (2) that has at least one filtration element (8) in the form of at least one screen with holes that has cutting and sharp edges for fragmentation of solids, the at least one screen being of coiled construction, with interstices (18) provided between the screen material, the interstices (18) allowing flow for the distribution of micro-organic accumulations in the event of clogging of the at least one screen.

2. Sewage treatment system according to Claim 1, **characterized in that** the fragmentation/filtration element (2) has a space at one of its ends as a bacterial nest which to ensure survival of the micro-organisms is filled with adsorptive material and protects micro-organisms against biocides (10).

3. Sewage treatment system according to either of the preceding claims, **characterized in that** the casing (1) of the first stage has a substantially triangular shape in transverse cross-section and with the inserted cylindrical fragmentation/filtration element (2) forms three zones and collects and distributes the sewage passing through the fragmentation/filtration element (2) and, by virtue of the positioning of the aerator (4) at one of the lower vertices at the base of the triangular casing (1), forms zones of different oxygen concentration, with a zone of maximum oxygen concentration located at the same vertex (V1) at the base of the triangle as the aerator and extending to the outlet, and a zone of minimum oxygen concentration with anoxic behaviour - in which oxygen is generated from oxides such as SO, SO2, NO, and NO2 by micro-organisms that get insufficient oxygen there, thus effecting denitrification and desulphurization - occupying the opposite vertex (V2) at the base of the triangle and extending to the outlet, and with a zone at the third vertex of the triangle receiving the pumped-in air and the sewage treated in the first stage, which flows through the top outlet nozzle (7).

4. Sewage treatment system according to any one of the preceding claims, **characterized in that** the first stage has a centralized sewage distributor (3) which is located inside the fragmentation/filtration element (2) and has an inlet nozzle (15) outside the casing (1) to which sewage from one or more toilets is led via rigid or flexible piping, the sewage distributor having openings (16) to distribute the sewage inside the fragmentation/filtration element (2).

5. Sewage treatment system according to any one of the preceding claims, **characterized in that** the first stage has an aerator (4) running along the length of the filter element (2) and consisting of a tubular element made of flexible material with a large number of holes producing from infed air a multitude of bubbles that pass in an upward stream from the zone of maximum oxygen concentration (V1) and around the cylindrical fragmentation/filtration filter and collect in the third (i.e. upper) zone (V3), which has a centrally located outlet nozzle (7).

6. Sewage treatment system according to any one of the preceding claims, **characterized in that** the second stage has at least one external casing (E) containing all elements of the sewage treatment system, in particular the first and third stages, all fittings and interconnecting pipework, and the elements of the pump (13), level monitor (20) and emergency outlet (17).

7. Sewage treatment system according to any one of the preceding claims, **characterized in that** the labyrinthine plastic filament wool in the oxidizing chamber (B) comprises up to 90 to 95% of voids which are filled with sewage and prevent undesired sewage flows and force the sewage to pass through the labyrinth and deposit the organic material, together with the micro-organisms, on its surface, where the micro-organisms produce a gelatinous coating as a biofilm and then continuously decompose the impinging organic substances.

8. Sewage treatment system according to any one of the preceding claims, **characterized in that** by means of a pump (13) which is housed in its own casing (19) and immersed in the effluent which has been broken down by the micro-organisms and purified by filtration, is able to pump purified water from the lower part of the external casing (B) under the fine filter (C) or third stage of this sewage treatment system, directly to the environment as treated waste water.

9. Sewage treatment system according to any one of the preceding claims, **characterized in that** the second stage has an emergency outlet (17) through which the waste water can run out, or be pumped out by a pumping plant at a marina, in the event of failure of the built-in pump.

10. Sewage treatment system according to any one of Claims 1, 6 and 8, **characterized in that** the third stage is arranged in the lower part of the casing (E) immediately after the oxidizing chamber (B) and has a granulated adsorption medium between two screen layers which are corrugated to form a larger area of through flow and whereby the sewage that has already been treated and liquefied in the first and second stages is forced to pass through this filter where residues that have not been trapped in the other two stages are retained and broken down.

11. Sewage treatment system according to any one of Claims 1, 6, 7, 8 and 10, **characterized by** the fine filter (C), which, through the insertion forms an aeration (12) underneath its corrugated screen which produces oxygen through a microperforated hose in the form of microbubbles that pass from the lower part to the upper part of the casing (E) through the oxidizing chamber (B) and supply the fine filter (C) with sufficient oxygen production for replenishment of the biological oxygen consumption, the fine filter forming a protected space for a rich aerobic and specialized population of micro-organisms which by its biological activity regenerates the adsorption medium and renders it permanently capable of removing the residues.

12. Sewage treatment system according to either of Claims 1 and 7, **characterized by** filtration by means of plastic filament wool that is **characterized by** a production process which by using extrusion rather than a turning process makes it possible for the plastic material to be brought in contact while still hot and soft with activated carbon dust or similar adsorption material and for it to be finely coated therewith to produce a surface on the thin filaments which by virtue of these adsorptive capacities is more efficient in trapping the organic materials and fixing micro-organisms.

13. Sewage treatment system according to Claim 1, **characterized in that** in order to reduce leakage and seepage of odours through hoses and fittings, a ventilation outlet (21) is provided through which suction is applied to produce a partial vacuum throughout the system and remove gases formed in the casing or in the oxidizing chamber.

14. Sewage treatment system according to any one of the preceding claims, **characterized in that** it is configured either as a compact unit in which the whole system functions inside a single casing (E), or as a larger-sized plant in which individual stages (A, B, C) function as autonomous units (Fig. 14) and aeration is provided by an oxidizing tower (D).

15. Sewage treatment system according to any one of the preceding claims, **characterized in that** the flexible hoses are jacketed so that the odours due to small-molecular mercaptans migrating through the walls of flexible hose materials and leaving unpleasant smells are retained in the space between inner hose and outer jacket, the latter consisting of rigid plastic material or metal and being impermeable to odours.

16. Process for the biofiltration of sewage, **characterized in that** it comprises three stages wherein
in a first stage (A) the solid matter in the sewage is disintegrated by a fragmentation and filtration process in a fragmentation filter (2) and distributed over an area, and growth of the micro-organisms needed for the decomposition and dissolution of the organic substances is accelerated by aeration, and the fragmentation filter has at least one screen with holes and is fabricated in a coil with interstices between the [coils of] the at least one coiled screen, and small-sized fragmented faecal matter migrates continuously between holes of at least one screen and interstices (18), and an emergency flow is set up in the interstices in the event of clogging of the at least one screen so that the micro-organic accumulations are distributed, and wherein
in the second stage the pretreated sewage passes into an oxidizing/collecting chamber (B) and flows through labyrinthine plastic filament wool (11) in which the organic substances together with the micro-organisms are trapped and distributed over the filament surfaces and broken down, and
the effluent, which no longer contains solids, reaches the third stage, in which it flows through a fine filter so that liquid residues are adsorbed and finally broken down.

## Revendications

1. Installation de traitement des eaux fécales avec une filtration sélective dans des séquences et/ou zones déterminées,
- avec un premier niveau comportant un carter (1), des éléments de filtration/fragmentation (2), qui retiennent les matières solides, un distributeur d'eaux fécales (3) et un aérateur (4) qui est disposé dans le sens longitudinal de l'élément de filtration (2),
- avec un deuxième niveau comportant une chambre d'oxydation et de rétention avec une laine de particules de matière plastique en forme de labyrinthe, qui est entourée par un carter extérieur (E) et qui comporte un volume libre, de telle sorte que les eaux usées disposent d'un certain temps pour la décomposition, et
- avec un troisième niveau comportant un filtre fin (C) et/ou un filtre à matériau d'adsorption, vers lequel sont acheminées les eaux usées prétraitées du premier et du deuxième niveau, qui passent à travers le matériau d'adsorption, et lequel sépare et décompose les contaminations qui n'ont pas été retenues et traitées par le premier et le deuxième niveau/élément,
**caractérisée en ce que**, dans le premier niveau, une matière solide est introduite dans l'élément de fragmentation/filtration (2), qui comporte au moins un élément de filtration (8) sous la forme d'au moins un filtre perforé avec des arêtes vives et coupantes pour une fragmentation des matières solides, et ledit au moins un filtre étant réalisé en forme de spires, dans lequel des espaces intermédiaires (18) sont prévus entre le matériau filtrant, lesdits espaces intermédiaires (18) permettant, en cas d'obstruction dudit au moins un filtre, un écoulement pour la distribution des amas de microorganismes.

2. Installation de traitement des eaux fécales selon la revendication 1, **caractérisée en ce que** l'élément de fragmentation/filtration (2) comporte sur l'un des côtés une chambre formant un nid de bactéries qui, pour la survie des micro-organismes, est rempli d'un matériau adsorbant et protège (10) les micro-organismes contre les biocides.

3. Installation de traitement des eaux fécales selon l'une quelconque des revendications précédentes, **caractérisée en ce que** le carter (1) du premier niveau a une section transversale avec une forme sensiblement triangulaire et, avec l'élément de fragmentation/filtration (2) cylindrique monté dans celui-ci, forme trois zones, et produit une accumulation et une distribution des eaux usées circulant à travers l'élément de fragmentation/filtration (2) et, par le positionnement de l'aérateur (4) dans l'une des arêtes inférieures de la base du carter (1) triangulaire, forme différentes zones de concentration d'oxygène, une zone avec une concentration maximum d'oxygène au niveau de l'arête (V1) de la base du triangle étant disposée depuis l'aérateur (4) jusqu'à la sortie, et une zone au niveau de l'arête (V2) opposée de la base du triangle jusqu'à la sortie, laquelle accepte une concentration minimum d'oxygène avec un comportement anoxique, moyennant quoi des micro-organismes, qui y reçoivent trop peu d'oxygène, génèrent de l'oxygène à partir d'oxydes, tels que SO, SO₂, NO, NO₂, et il se produit ainsi une dénitrification et une désulfuration, sachant qu'une zone au niveau de la troisième arête du triangle reçoit l'air introduit par pompage et les eaux usées traitées dans le premier niveau, lesquelles circulent à travers la tubulure de sortie (7) supérieure.

4. Installation de traitement des eaux fécales selon l'une quelconque des revendications précédentes, **caractérisée en ce que** le premier niveau comporte un distributeur d'eaux usées (3) centralisé, lequel est positionné à l'intérieur de l'élément de fragmentation/filtration (2), et comporte en dehors du carter (1) une tubulure d'admission (15) vers laquelle sont acheminées les eaux usées provenant d'un ou de plusieurs WC via des tubes ou tuyaux flexibles raccordés, le distributeur d'eaux usées comportant des orifices (16) pour la distribution des eaux fécales à l'intérieur de l'élément de fragmentation/filtration (2).

5. Installation de traitement des eaux fécales selon l'une quelconque des revendications précédentes, **caractérisée en ce que** le premier niveau comporte un aérateur (4), qui est disposé dans le sens longitudinal du filtre (2) et est formé par un élément tubulaire en matériau élastique, qui comporte une pluralité de trous et génère avec une admission d'air une pluralité de bulles qui, dans un flux ascendant depuis la zone de concentration maximum d'oxygène (V1), flottent tout autour de l'élément de fragmentation/filtration et s'accumulent dans la troisième zone supérieure (V3), qui comporte une tubulure de sortie (7) positionnée au centre.

6. Installation de traitement des eaux fécales selon l'une quelconque des revendications précédentes, **caractérisée en ce que** le deuxième niveau comporte au moins un carter extérieur (E), qui reçoit tous les éléments de l'installation de traitement des eaux fécales, en particulier le premier niveau et le troisième niveau, tous les raccords et les tubes montés entre ceux-ci et les éléments de la pompe (13), le contrôle de niveau (20) et la sortie de secours (17).

7. Installation de traitement des eaux fécales selon l'une quelconque des revendications précédentes, **caractérisée en ce que** la laine de particules de matière plastique en forme de labyrinthe dans la chambre d'oxydation (B) est constituée de 90 à 95 % de lacunes qui sont comblées par les eaux usées et empêchent des écoulements indésirables des eaux usées et forcent les eaux usées à traverser le labyrinthe et à sortir du matériau organique conjointement avec les micro-organismes sur la surface, où les micro-organismes produisent un revêtement gélatineux en forme de biofilm et décomposent alors en continu les matières organiques affluant.

8. Installation de traitement des eaux fécales selon l'une quelconque des revendications précédentes, **caractérisée en ce qu'**au moyen d'une pompe (13), qui est montée à l'intérieur de son propre carter (19) et est plongée dans les eaux usées décomposées par les micro-organismes et épurées par filtration, les eaux épurées peuvent être évacuées par pompage directement sous forme d'eaux usées traitées vers le milieu naturel depuis la partie inférieure du carter extérieur (B) en dessous du filtre fin (C) ou depuis le troisième niveau de cette installation de traitement des eaux fécales.

9. Installation de traitement des eaux fécales selon l'une quelconque des revendications précédentes, **caractérisée en ce que** le deuxième niveau comporte une sortie de secours (17) à travers laquelle les eaux usées peuvent affluer vers l'extérieur en cas de défaillance de la pompe ou peuvent être évacuées par pompage dans une marina par une installation de pompage.

10. Installation de traitement des eaux fécales selon la revendication 1, 6 ou 8, **caractérisée en ce que** le troisième niveau est disposé dans la partie inférieure du carter (E) directement en aval de la chambre d'oxydation (B) et comporte un matériau d'adsorption granulaire entre deux couches de filtrage, qui sont pliées pour former une plus grande surface de passage, et les eaux fécales, qui ont déjà été traitées et liquéfiées dans le premier et le deuxième niveau, sont forcées de traverser ce filtre, dans lequel sont retenues et décomposées les matières résiduelles, qui n'ont pas été retenues dans les deux autres niveaux.

11. Installation de traitement des eaux fécales selon la revendication 1, 6, 7, 8 ou 10, **caractérisée par** le filtre fin (C) qui, par sa mise en place en dessous de son filtre plié, forme une aération (12) qui produit de l'oxygène par un tuyau flexible avec des micro-perforations avec des micro-bulles, qui depuis la partie inférieure jusqu'à la partie supérieure du carter (E) parviennent à travers la chambre d'oxydation (B) et alimentent le filtre fin (C) avec une production d'oxygène suffisante pour compléter la consommation biologique d'oxygène, le filtre fin formant une chambre protégée pour une riche occupation de micro-organismes aérobies et spécialisés, qui, par leur activité biologique, régénèrent le moyen d'adsorption et le rendent toujours apte à séparer les matières résiduelles.

12. Installation de traitement des eaux fécales selon la revendication 1 ou 7, **caractérisée par** la filtration par l'intermédiaire d'une laine de particules de matière plastique, qui est **caractérisée par** un procédé de fabrication, dans lequel une extrusion, en lieu et place d'un processus de rotation, permet que la matière plastique encore chaude et encore molle soit mise en contact avec une poussière de charbon actif ou un matériau d'adsorption similaire et que la matière plastique soit ainsi revêtue d'une fine couche de celui-ci, de telle sorte que les particules minces forment une surface qui, avec ces propriétés d'adsorption, présente une meilleure efficacité pour la rétention des matières organiques et la fixation des micro-organismes.

13. Installation de traitement des eaux fécales selon la revendication 1, **caractérisée en ce que** pour diminuer les inétanchéités et les possibilités de passage d'odeurs à travers les tuyaux flexibles et les raccords, il est prévu une sortie d'aération (21), à travers laquelle se produit une aspiration, générée par une dépression dans l'ensemble du système, et sont éliminés les gaz formés dans le carter ou dans la chambre d'oxydation.

14. Installation de traitement des eaux fécales selon l'une quelconque des revendications précédentes, **caractérisée en ce qu'**elle est réalisée sous la forme d'une installation compacte, dans laquelle la totalité du système travaille dans un seul carter (E), ou sous la forme d'une installation de grandes dimensions, dans laquelle chaque niveau (A, B, C) travaille dans sa propre unité indépendante (figure 14) et l'aération est fournie par une tour d'oxydation (D).

15. Installation de traitement des eaux fécales selon l'une quelconque des revendications précédentes, **caractérisée en ce que** les tuyaux flexibles sont revêtus, de telle sorte que les odeurs, générées par les mercaptans à petites molécules et traversant les parois des tuyaux flexibles et développant des odeurs désagréables, sont retenues dans l'espace entre un tuyau flexible intérieur et un tuyau flexible extérieur, sachant que le tuyau flexible extérieur est réalisé dans une matière plastique rigide ou en métal et ne laisse pas passer les odeurs.

16. Procédé de biofiltration des eaux usées, **caractérisé en ce qu'**il comporte trois niveaux, sachant que
- dans un premier niveau (A), les matières solides des eaux usées sont réduites en menus morceaux par un processus de fragmentation/filtration dans un filtre de fragmentation (2) et sont réparties sur une surface, et, sous l'effet de l'aération, il se produit une accélération de la croissance des micro-organismes nécessaires pour la décomposition et la dissolution des matières organiques, le filtre de fragmentation comportant au moins un filtre perforé, qui est réalisé en forme de spires avec des espaces intermédiaires entre ledit au moins un filtre en forme de spires, et les matières fécales réduites en continu en menus morceaux passent entre des trous d'au moins un filtre et des espaces intermédiaires (18) et, en cas d'obstruction dudit au moins un filtre, il se forme un flux de secours dans les espaces intermédiaires, par lequel les amas de micro-organismes sont distribués, et sachant que
- dans le deuxième niveau, les eaux usées prétraitées parviennent dans une chambre d'oxydation et de rétention (B) et passent à travers une laine de particules de matière plastique (11) en forme de labyrinthe, dans laquelle les matières organiques sont retenues avec les micro-organismes et sont distribuées et décomposées sur les surfaces des particules, et
- les eaux usées, qui maintenant ne contiennent plus de matières solides, parviennent dans le troisième niveau, dans lequel elles passent à travers un filtre fin, de telle sorte que les matières résiduelles y sont adsorbées et finalement décomposées.
